(19) Europäisches Patentamt
European Patent Office
Office européen des brevets

(11) Publication number: **0 557 944 A1**

(12) **EUROPEAN PATENT APPLICATION**

(21) Application number: **93102806.2**

(51) Int. Cl.[5]: **C08F 257/02**, C08K 5/00

(22) Date of filing: **24.02.93**

(30) Priority: **25.02.92 JP 37868/92**

(43) Date of publication of application: **01.09.93 Bulletin 93/35**

(84) Designated Contracting States: **DE FR GB IT SE**

(71) Applicant: **TAKEDA CHEMICAL INDUSTRIES, LTD.**
**1-1, Doshomachi 4-chome**
**Chuo-ku, Osaka 541(JP)**

(72) Inventor: **Takeuchi, Hiroshi**
**6-10, Honmachi 7-chome**
**Toyonaka, Osaka 560(JP)**
Inventor: **Okatani, Susumu**
**3-26, Matsugaoka 3-chome**
**Takatsuki, Osaka 569(JP)**
Inventor: **Oshima, Junji**
**10-8, Uenohigashi 3-chome**
**Toyonaka, Osaka 560(JP)**
Inventor: **Fujii, Tatsuo**
**125-2, Uguisudai**
**Nagaokakyo, Kyoto 617(JP)**

(74) Representative: **von Kreisler, Alek et al**
**Patentanwälte von Kreisler-Selting-Werner,**
**Postfach 10 22 41, Bahnhofsvorplatz 1**
**D-50462 Köln (DE)**

(54) **Core-shell polymer and plastisol therefrom.**

(57) A plastisol which comprises:
(a) a core-shell polymer which comprises a core layer polymerized mainly from an aromatic vinyl monomer, and a shell layer polymerized from a monomer mixture comprising 50-95% by weight of methyl methacrylate as a first monomer, 5-50% by weight of at least one of an $\alpha$, $\beta$-ethylenically unsaturated carboxylic acid and a hydroxyalkyl ester of $\alpha$, $\beta$-ethylenically unsaturated carboxylic acid as a second monomer, and 0-30% by weight of a third monomer copolymerizable with the first and second monomer, the shell layer being contained in an amount of 5-80% by weight based on the core-shell polymer and having a weight average particle size of 0.1-20 microns; and
(b) a plasticizer as an aromatic compound having at least two independent aromatic rings in the molecule in which the core-shell polymer is dispersed.

EP 0 557 944 A1

Field of the Invention

This invention relates to a core-shell polymer and plastisol prepared using the same. More particularly, the invention relates to a plastisol which has a high fluidity and an excellent storability, and provides films or molded articles of excellent mechanical strength and toughness, and also to a core-shell polymer suitable for the preparation of such a plastisol.

Description of the Prior Art

A plastisol is composed of a liquid plasticizer having fine polymer particles dispersed therein, usually together with other additives such as a pigment or a stabilizer, and is in wide use as a molding material. When the plastisol is heat-treated at a suitable temperature, the polymer particles get mixed with the plasticizer, and when being cooled to normal temperatures, it solidifies to form a gelled material such as films or molded articles.

The plastisol is exemplified by one composed of a plasticizer having polyvinyl chloride dispersed therein, and such a plastisol is preferably used to form a protective coating on outer plates of automobiles. The polyvinyl chloride plastisol has many advantages. For example, it has an advantage that polyvinyl chloride particles are stably dispersed in a plasticizer for a long period of time without being plasticized by the plasticizer and with substantially no increase in vicosity when it is stored at normal temperatures, and yet when the plastisol is heat-treated at a suitable temperature, it gets well mixed with the plasticizer.

However, the polyvinyl chloride resin has disadvantages that it generates a toxic hydrogen chloride gas when it is burnt, or it is difficult to reuse the resin for the purpose of resource saving, and hence a new plastisol which will take the place of polyvinyl chloride plastisol is demanded from the standpoint of environmental protection.

With such a demand for a background, a number of polymers formed of vinyl monomers which contain no halogens for a component of plastisol in lieu of polyvinyl chloride, however, the polymers which have been heretofore proposed have many problems depending upon the degree of miscibility with a plasticizer combined therewith for the preparation of plastisol.

Firstly, for instance, some of the polymers get mixed with a plasticizer soon at normal temperatures when they are dispersed in a plasticizer, and hence the resultant plastisol is poor in storability. Secondly, some of the polymers form a plastisol together with a plasticizer, but the viscosity of the plastisol increases with time at normal temperatures, and hence such a plastisol is poor in fluidity. Thirdly, some of the polymers form a plastisol together with a plasticizer which is stable at normal temperatures, but when it is heated and then cooled back to normal temperatures, there is formed a gel from the inside of which the plasticizer used exudes to the surface of the gel on account of poor miscibility of the polymers with the plasticizer used. Finally, when a plastisol is comprised of a plasticizer and a polymer highly miscible therewith, such a plastisol provides a film poor in tensile strength, and on the other hand, when a plastisol is comprised of a plasticizer and a polymer poor in miscibility therewith, such a plastisol provides a brittle film poor in elongation, and thus in either case, the film is of no practical use.

On account of these problems remained unsolved as above set forth, no plastisol has yet been put to practical use in liew of polyvinyl chloride plastisol.

For example, there is proposed a plastisol comprised of a polymer or a copolymer formed of alkyl methacrylates combined with a variety of plasticizers, as described in Japanese Patent Laid-open No. 51-71344. However, in this regard, there is a problem. As well known, the miscibility of polymer to plasticizers is contrary to the fluidity and storability of plastisol. Accordingly, for instance, some of the plastisol proposed therein are composed of a plasticizer and a polymer of good miscibility therewith. Such a plastisol provides a gel of excellent flexibility, but it has such a viscosity as increases with time, and hence it is poor in storability. On the other hand, some of the plastisol proposed are composed of a plasticizer and a polymer of insufficient miscibility therewith. Such a plastisol has a good storability at normal temperatures, but it provides a hard and brittle gel which can not be put to practical use.

A plastisol is also proposed in Japanese Patent Laid-open No. 54-117553 which is comprised of polymethyl methacrylate or copolymers of methyl methacrylate covered with polycarboxylic acid salts dispersed in a plasticizer. This plastisol is still attended by such problems as above mentioned, and will not take the place of polyvinyl chloride plastisol.

A core-shell polymer is described in Japanese Patent Laid-open No. 53-144950 which is comprised of a core layer miscible with a plasticizer and a shell layer immiscible with a plasticizer and having a glass transition temperature of not less than 50 °C. Since such a core-shell polymer has no clear boundary between the layers on account of affinity of polymers of the layers to each other, so that such a core-shell

polymer has disadvantages as follows when it is used in a plastisol. Firstly, when the shell layer is composed of a thin layer of polymer, the surface of the core-shell polymer has no fixed miscibility with a plasticizer, and hence the resultant plastisol formed of such a core-shell polymer dispersed in the plasticizer is poor in storability. Secondly, if the shell layer is made thick to attain storability, the core-shell polymer has a large proportion of shell layer which is immiscible with the plasticizer, but also has a high glass transition temperature, and hence the resultant plastisol formed of such a core-shell polymer provides a brittle gel short of elongation.

## Brief Summary of the Invention

The present inventors have made investigations to solve the above mentioned problems and obtain a plastisol which may take the place of polyvinyl chloride plastisol from the standpoint of development of a new core-shell polymer and its use in a plastisol, and have attained a remarkable improvement in the properties of plastisol by the use of such a new core-shell polymer having a specific strucrture.

It is, therefore, an object of the invention to provide a plastisol which contains fine particles of such a core-shell polymer, and has the following improved properties: it has a fluidity suitable for use at normal temperatures; it has an excellent storability so as to be free from increase of viscosity and gellation with time during a long period storage; and it has a high miscibility with a plasticizer so that no plasticizer exudes from the inside to the surface of the resultant gel; and in addition, it provides a gel having a sufficient mechanical strength, so that it may take the place of conventional polyvinyl chloride plastisol.

It is also an object of the invention to provide a plastigel derived from such a plastisol.

It is a further object of the invention to provide such a core-shell polymer suitable for the production of such a plastisol or a plastigel as above mentioned.

According to the invention, there is provided a core-shell polymer which comprises a core layer polymerized mainly from an aromatic vinyl monomer, and a shell layer polymerized from a monomer mixture comprising 50-95% by weight of methyl methacrylate as a first monomer, 5-50% by weight of at least one of an $\alpha$, $\beta$-ethylenically unsaturated carboxylic acid and a hydroxyalkyl ester of $\alpha$, $\beta$-ethylenically unsaturated carboxylic acid as a second monomer, and 0-30% by weight of a third monomer copolymerizable with the first and second monomer, the shell layer being contained in an amount of 5-80% by weight based on the core-shell polymer and having a weight average particle size of 0.1-20 microns.

There is also provided a plastisol according to the invention which comprises such a core-shell polymer dispersed in a plasticizer having at least two independent aromatic rings in the molecule.

## Detailed Description of the Invention

The core-shell polymer will be first described.

The core-shell polymer of the present invention can be produced by a multi-stage seed emulsion polymerization method or a multi-stage suspension polymerization method in which a polymer formed in a preceding stage is serially covered with a polymer formed in the following stage in a continuous sequence. When the multi-stage seed emulsion polymerization method is employed, usually a seed latex is prepared by emulsion polymerization of monomers added in a lump, and then seed polymerization is carried out in the presence of the seed latex to form a core latex, followed by repetition of seed polymerization in the presence of core latex, thereby providing a latex of core-shell polymer. Usually such a monomer as styrene, methyl methacrylate, or ethyl acrylate, or a mixture of these monomers may be used for the preparation of seed latex.

As well known, in the emulsion polymerization, there may be used, as an emusifier, an anionic surfactant such as sodium dodecylbenzene sulfonate or sodium lauryl sulfate, an nonionic surfactant such as poly(oxyethylene)nonylphenyl ether or sorbitan monolaurate, or a cationic surfactant such as octadecenylamine acetate; there may be used, as a polymerization initiator, a peroxide such as potassium persulfate or cumene hydroperoxide, or an azo compound such as 2,2'-azobis(2-amidinopropane) hydrochloride.

In turn, when multi-stage seed suspension polymerization is employed to prepare a seed latex, an organic polymer such as polyvinyl alcohol or hydroxyethyl cellulose or an inorganic substance such as calcium phosphate may be used as a protective colloid, and a peroxide or an azo compound such as benzoyl peroxide or 2,2'-azobis(isobutyronitrile) may be used as a polymerization initiator.

For simplicity, the production of core-shell polymer of the invention will be described, taking the case of two-stage polymerization composed of the first stage seed polymerization in the presence of seed latex to prepare a core latex or a latex of polymers to form a core of core-shell polymer, and the second stage seed

polymerization in the presence of the core latex to prepare a shell, namely a latex of core-shell polymer.

The first-stage polymerization forms a glassy polymer as a core which is miscible with a plasticizer from monomers mainly composed of aromatic vinyl monomers. The aromatic vinyl monomer includes a styrenic monomer such as styrene, α-methylstyrene or monochlorostyrene, an alkyl vinyl benzene such as vinyltoluene or ethylvinylbenzene, or a polynuclear aromatic vinyl hydrocarbon such as vinylnaphthalene. The aromatic vinyl monomer may be used alone or as a mixture. In particular, the styrenic monomer is preferred as the aromatic vinyl monomer, and inter alia, styrene.

In the first-stage polymerization, a non-aromatic vinyl monomer copolymerizable with the aromatic vinyl monomer may be optionally employed. The non-aromatic vinyl monomer includes, for example, a conjugated aliphatic dienic compound of 4-6 carbons such as butadiene, isoprene or chloroprene, an alkyl (meth)acrylate wherein the alkyl has 1-10 carbons such as ethyl acrylate, propyl acrylate, butyl acrylate, cyclohexyl acrylate, 2-ethylhexyl acrylate, methyl methacrylate or butyl methacrylate, or a vinyl cyanide or a vinylidene cyanide such as acrylonitrile or methacrylonitrile.

Further examples of the non-aromatic vinyl monomer include an unsaturated carboxylic acid, preferably an α, β-ethylenically unsaturated carboxylic acid, such as acrylic acid or methacrylic acid, and a hydroxylalkyl ester wherein the alkyl has 1-10 carbons such as hydroxyethyl (meth)acrylate or hydroxypropyl (meth)acrylate. Glycidyl (meth)acrylate may also be used as a non-aromatic vinyl monomer.

In the first-stage polymerization, a cross-linking monomer may be used as a monomer in an amount of not more than 5% by weight based on the total monomers used in the first-stage polymerization. A grafting monomer may also be used as a monomer in an amount of not more than 5% by weight based on the total monomers used in the first-stage polymerization.

The use of cross-linking monomer or grafting monomer is well known in the field of production of core-shell polymer, as described in U.S. Patent No. 4,096,202 to Farnham et al. The cross-linking monomer is a polyfunctional monomer which has a plurality of addition-polymerizable ethylenically unsaturated bonds in the molecule all of which have substantially the same polymerization reactivity. Accordingly, the cross-linking monomer provides a partial reticulated structure with a polymer which forms a core layer of core-shell polymer. Namely the cross-linking monomer provides a partial cross-linked structure in a core layer.

There may be used as such a cross-linking monomer, for example, an aromatic divinyl monomer such as divinylbenzene, or an alkane polyol poly(meth)acrylate such as ethylene glycol diacrylate, butylene glycol diacrylate, hexanediol diacrylate, hexanediol dimethacrylate, oligoethylene glycol diacrylates, oligoethylene glycol dimethacrylates, trimethylolpropane diacrylate, trimethylolpropane dimethacrylate, trimethylolpropane triacrylate or trimethylolpropane trimethacrylate.

The grafting monomer is a polyfunctional monomer which has a plurality of addition-polymerizable ethylenically unsaturated bonds in the molecule at least one of which has a different polymerization reactivity from at least one other of the addition-polymerizable ethylenically unsaturated bonds. The grafting monomer provides a residual level of unsaturation in the resultant polymer particles at or near the surface thereof in the first-stage polymerization, and the residual addition-polymerizable unsaturation participates in the subsequent second-stage polymerization so that at least a portion of the resultant polymer layer or shell layer is chemically attached to the surface of core at the interface.

The preferred grafting monomer is an allyl ester of an ethylenically unsaturated carboxylic acid such as allyl acrylate, allyl methacrylate, diallyl maleate, dially fumarate, diallyl itaconate, maleic acid monoallyl ester (half ester), fumaric acid monoallyl ester (half ester) or itaconic acid monoallyl ester (half ester).

In the first-stage polymerization, the aromatic vinyl monomer, in particular, the styrenic monomer, and inter alia, styrene, is used in an amount of not less than 50% by weight, preferably not less than 80% by weight, of the total monomer used for the preparation of core.

It is preferred that the core is formed of a glassy polymer having a glass transition temperature of not less than 30 °C, preferably not less than 40 °C.

The second-stage polymerization forms a polymer which is poor in miscibility with a plasticizer and covers the core to form a shell on the core. The second-stage polymerization uses a monomer mixture comprising methyl methacrylate as a first monomer, at least one of an α, β-ethylenically unsaturated carboxylic acid and a hydroxyalkyl ester of α, β-ethylenically unsaturated carboxylic acid as a second monomer, and optionally a third monomer which is copolymerizable with the first and second monomer.

The first monomer or methyl methacrylate is used in an amount of 50-95% by weight, preferably in an amount of 60-90% by weight, based on the total monomer used in the second-stage polymerization.

There may be used preferably acrylic acid, methacrylic acid or itaconic acid as the second monomer, with methacrylic acid being most preferred, as the α, β-ethylenically unsaturated carboxylic acid. In turn, there may be used preferably hydroxyethyl acrylate, hydroxypropyl acrylate or hydroxyethyl methacrylate, with hydroxyethyl methacrylate being most preferred, as the hydroxyalkyl ester of α, β-ethylenically

unsaturated carboxylic acid.

The second monomer is used in an amount of 5-50% by weight, preferably in an amount of 10-40% by weight, based on the total monomer used in the second-stage polymerization.

The third monomer may be optionally used in the second-stage polymerization in the preparation of shell layer. The third monomer used includes, for example, an acrylic acid ester such as methyl acrylate, ethyl acrylate, butyl acrylate, 2-ethylhexyl acrylate, cyclohexyl acrylate or glycidyl acrylate, an methacrylic acid ester such as butyl methacrylate, a vinyl ester such as vinyl acetate or vinyl propionate, or a vinyl cyanide or a vinylidene cyanide such as acrylonitrile or methacrylonitrile, an unsaturated acid amide such as acrylic amide, N-methylolacrylic amide, N-butoxymethylacrylic amide, an aromatic vinyl monomer, in particular, a styrenic monomer, such as styrene, vinyltoluene, α-methylstyrene or chlorostyrene, or a polynuclear aromatic vinyl hydrocarbon such as vinylnaphthalene, an aliphatic conjugated dienic compound such as bitadiene or isoprene.

In the second-stage polymerization also, such a cross-linking monomer or a grafting monomer may be used together with the monomers above mentioned in an amount of not more than 5% by weight based on the total monomers used in the second-stage polymerization.

It is preferred that the shell has a glass transition temperature not less than 40 °C, preferably not less than 50 °C.

The proportion of the core layer and the shell layer of the core-shell polymer of the invention may be designed depending upon the miscibility of each of the layers with a plasticizer used to form a plastisol. However, the core-shell polymer of the invention usually contains the shell layer in an amount of 5-80% by weight, preferably in an amount of 20-70% by weight, based on the core-shell polymer. Accordingly, the core-shell polymer of the invention usually contains the core layer in an amount of 20-95% by weight, preferably in an amount of 30-80% by weight.

The plastisol of the invention comprises the core-shell polymer as above set forth dispersed in a liquid plasticizer, and after heat-treatment it provides a gel which contains the core layer having a good miscibility with the plasticizer and the shell layer having a poor miscibility with the plasticizer, with the layers being present in the gel phase-separarated from each other. When the shell layer is contained in an amount of more than 80% by weight based on the core-shell polymer, the resultant gelled product may be brittle and poor in toughness. However, when the shell layer is contained in an amount of less than 5% by weight based on the core-shell polymer, the core layer may be insufficiently covered with the shell layer so that the resultant plastisol may be reduced in storability.

The core-shell polymer of the invention is basically composed of two layer, the core layer and the shell layer, as above set forth wherein the core layer has a good miscibility with the plasticizer and the shell layer has a poor miscibility with the plasticizer used at normal temperatures. However, the core layer and shell layer may be composed of a plurality of layers, respectively.

The core-shell polymer of the invention is produced by a multi-stage seed emulsion polymerization method or suspension polymerization method as set forth hereinbefore. By way of example, when the multi-stage seed emulsion polymerization method is employed, a latex which has a weight average particle size usually in the range of 0.1-5 microns, and preferably, from the standpoint of stable storability, in the range of 0.3-2 microns, is produced, and then the resultant polymer particles are separated by a freeze-thaw or salting-out procedure, and are then centrifugally dehydrated and dried, thereby to provide a core-shell polymer in the form of powder.

When the two-stage suspension polymerization is employed, a suspension which contains polymer particles having a weight average particle size of 1-20 microns, preferably of 5-10 microns is produced, and are then centrifugally dehydrated and dried, thereby to provide a core-shell polymer in the form of powder. When a spray-drying technique is used, the core-shell polymer may be directly harvested from the latex or suspension.

The plastisol of the invention can be produded by dispersing the core-shell polymer as above set forth in a liquid plasticizer which has at least two independent aromatic rings wherein the independent aromatic ring is an aromatic ring separated from other aromatic rings either by an interatomic chemical bond or covalent bond, or by at least one atom. Therefore, a fused aromatic ring is a single aromatic ring, and the aromatic ring is typically a benzene ring which may carry one or more substituents thereon such as alkyls.

A preferred group of examples of the plasticizer used in the invention is represented by the formula:

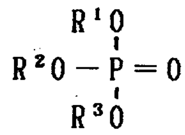

wherein $R^1$ and $R^2$ independently represent an aryl or an arylalkyl each of which may carry inactive substituents thereon, and $R^3$ is an aryl or an arylalkyl each of which may carry inactive substituents thereon, or an alkyl. The inactive substituents may preferably be an alkyl of 1-10 carbons. The aryl is preferably phenyl or an alkylphenyl exemplified by tolyl or isopropylphenyl. The $R^3$ group may be the same as $R^1$ or $R^2$, or may be an alkyl of 1-10 carbons such as octyl.

Accordingly, the preferred plasticizer according to the invention includes, for example, an organic phosphate such as tricresyl phosphate, cresyldiphenyl phosphate, diphenyloctyl phosphate or trisisopropylphenyl phosphate.

Further examples of the plasticizer according to the invention includes a phthalate such as butylbenzyl phthalate, dibenzyl phthalate, or a diphenyl compound such as diphenyl ether.

The plasticizer may be used singly or as a mixture. Among the above exemplified, an organic phosphate having three independent aromatic rings which may carry alkyls thereon in the molecule is particularly preferred.

From a standpoint of plasticizer, it is miscible with the core layer, whereas it is immiscible with the shell layer at normal temperatures, but when the plastisol is heated to a suitable temperature, the plasticizer becomes miscible with the shell layer, and when the plastisol is cooled to normal temperatures, it forms a gel or a plastigel having a sufficient strength and toughness.

The amount of the plasticizer in the plastisol of the invention may be determined depending upon the requisites to the plastisol or resultant gels, however, it is usually in the range of 65-130 parts by weight in relation to 100 parts by weight of the core-shell polymer used.

If necessary, the plastisol of the invention may contain diluents, cross-linking agents, inorganic fillers, organic fillers, dyes, pigments, antirusting agents and the like.

The plastisol of the invention has an excellent fluidity and storability at normal temperatures, and when it is heated to a temperature usually in the range of 100-180 °C, and then cooled, the plastisol forms a gel in the form of films or molded articles having a sufficient strength and toughness. Thus, the plastisol of the invention may be practically used in place of conventional polyvinyl chloride plastisol, and in particular may be suitably used to form a protective coating in the field of automobiles.

The invention will be described in more detail with reference to examples together with comparative examples, however, the examples are intended to illustrate the invention only, and should by no means be construed as being limitative of the scope of the invention.

In the examples and comparative examples, all parts are by weight and the abbreviations used therein have the following meanings.

Abbreviations

| | |
|---|---|
| Methyl methacrylate | MMA |
| Methacrylic acid | MAA |
| 2-Hydroxyethyl methacrylate | HEMA |
| Styrene | St |
| Deionized water | DIW |
| Sodium dioctyl sulfosuccinate | SSS |
| Sodium persulfate | SPS |
| Sodium hydrogen carbonate | SHC |

Measurement of Properties of Core-Shell Polymer

The weight average particle size of core-shell polymer was measured with a laser particle analyzing system Model LPA-3000 available from Otsuka Electronics Co., Ltd.

Measurement of Properties of Plastisol

The increase of viscosity was employed as an index of storability. The viscosity $\eta_0$ immediately after the preparation of plastisol and the viscosity $\eta_{10}$ after standing for ten days at a temperature of 40 °C were measured with a BH-type viscosimeter at a speed of two revolutions per minute, and the ratio of $\eta_{10}/\eta_0$ was taken as the increase of viscosity.

The strength at break and the elongation at break was measured with a JIS No. 4 testpiece formed out of sheet 1 mm thick in accordance with the method as prescribed in JIS K-6301. The sheet was prepared by pressing the plastisol at a temperature of 140 °C under a pressure of 100 kgf/$cm^2$ for 30 nimutes.

Example 1
(Production of Core-Shell Polymer A)

A polymerization equipment equipped with a reflux condenser was charged with 19 parts of DIW, 0.3 parts of 1% aqueous solution of SSS and 1.3 parts of 1% aqueous solution of SHC, and the charge was heated to 70 °C in a nitrogen stream with stirring. Then, 0.3 parts of St was added and dispersed over a period of ten minutes, after which 7.5 parts of 2% aqueous solution of SPS were added. The charge was reacted for ten minutes to form a seed latex.

An emulsified monomer mixture for the first-stage polymerization composed of 59.7 parts of St, 50 parts of 1% aqueous solution of SSS and 9 parts of 1% aqueous solution of SHC was added to the seed latex continuously over a period of six hours, and then the mixture was heated from 70 °C to 90 °C, followed by ageing at the temperature of 90 °C for one hour.

The temperature of the mixture was arranged to 70 °C, and then 2 parts of 2% aqueous solution of SPS was added to the mixture, and then an emulsified monomer mixture for the second-stage polymerization composed of 36 parts of MMA, 4 parts of MAA, 2 parts of 1% aqueous solution of SSS, 6 parts of 1% aqueous solution of SHC and 30 parts of DIW was added to the mixture continuously over a period of four hours, and then the mixture was heated from 70 °C to 90 °C, followed by ageing at the temperature of 90 °C for one hour.

After the completion of the reaction, the reaction mixture was cooled to room temperature, and was then filtered through a 300-mesh stainless steel sieve to provide a latex of core-shell polymer having a solid content of 44.0% and a weight average particle size of 675 nm. The latex was spray-dried to provide a core-shell polymer A.

Examples 2-4 and Comparative Example 1
(Production of Core-Shell Polymers B to E)

The core-shell polymers B to E were produced from the monomers as indicated in the Table 1.

TABLE 1

| | | Examples | | | Comparative Example |
|---|---|---|---|---|---|
| | | 2 | 3 | 4 | 1 |
| Core-shell polymer | | B | C | D | E |
| First-stage: | St | 60 | 60 | 50 | 60 |
| Second-stage: | MMA | 32 | 32 | 45 | 40 |
| | MAA | 8 | 4 | 5 | |
| | HEMA | | 4 | | |

Examples 5-11 and Comparative Examples 2 and 3
(Production of Plastisol and Measurement of Properties of Plastisol)

The core-shell polymers A to E prepared in the Examples 1 to 4 and the Comparative Example 1 were each dispersed in a plasticizer in an equal weight ratio as shown in the Table 2, to prepare plastisols. The increase of viscosity of the plastisol and the properties of film formed out of the plastisol are indicated in the

Table 2.

The abbreviations used in the Tables 1 and 2 have the following meanings.

| | |
|---|---|
| Tris(isopropylphenyl) phosphate | TIPP |
| Tricresyl phosphate | TCP |
| Cresyldiphenyl phosphate | CDP |
| Butylbenzyl phthalate | BBP |
| Diisononylphthalate | DINP |

TABLE 2

| | Examples | | | | | | | Comparative Examples | |
|---|---|---|---|---|---|---|---|---|---|
| | 5 | 6 | 7 | 8 | 9 | 10 | 11 | 2 | 3 |
| Core-shell polymer | A | A | A | A | B | C | D | E | A |
| Plasticizer | TIPP | TCP | CDP | BBP | TIPP | TIPP | TIPP | TIPP | DINP |
| Increase of Viscosity | 3 | 3.5 | 4 | 6 | 2.6 | 2.9 | 2.8 | Gelation | 1.2 |
| Strength at break ($kgf/mm^2$) | 48 | 35 | 33 | 25 | 46 | 42 | 52 | 40 | 13 |
| Elongation at break (%) | 590 | 600 | 660 | 480 | 340 | 360 | 400 | 620 | 90 |

## Claims

1. A core-shell polymer which comprises a core layer polymerized mainly from an aromatic vinyl monomer, and a shell layer polymerized from a monomer mixture comprising 50-95% by weight of

methyl methacrylate as a first monomer, 5-50% by weight of at least one of an α, β-ethylenically unsaturated carboxylic acid and a hydroxyalkyl ester of α, β-ethylenically unsaturated carboxylic acid as a second monomer, and 0-30% by weight of a third monomer copolymerizable with the first and second monomer, the shell layer being contained in an amount of 5-80% by weight based on the core-shell polymer and having a weight average particle size of 0.1-20 microns.

**2.** The core-shell polymer as claimed in claim 1 wherein not less than 50% by weight of the monomer used for the preparation of the core layer is an aromatic vinyl monomer.

**3.** The core-shell polymer as claimed in claim 1 wherein not less than 80% by weight of the monomer used for the preparation of the core layer is an aromatic vinyl monomer.

**4.** The core-shell polymer as claimed in claim 1 wherein the aromatic vinyl monomer is styrene.

**5.** The core-shell polymer as claimed in claim 1 wherein the core layer is composed of a glassy polymer having a glass transition temperature of not less than 30 °C.

**6.** The core-shell polymer as claimed in claim 1 wherein the monomer mixture for the preparation of the shell layer comprises 60-90% by weight of methyl methacrylate as the first monomer, 10-40% by weight of at least one of an α, β-ethylenically unsaturated carboxylic acid and a hydroxyalkyl ester of α, β-ethylenically unsaturated carboxylic acid as the second monomer, and 0-30% by weight of the third monomer copolymerizable with the first and second monomer.

**7.** The core-shell polymer as claimed in claim 6 wherein the second monomer is at least one of methacrylic acid and hydroxyethyl methacrylate.

**8.** The core-shell polymer as claimed in claim 1 wherein the shell layer is composed of a polymer having a glass transition temperature of not less than 40 °C.

**9.** The core-shell polymer as claimed in claim 1 wherein the core layer is polymerized from styrene, and the shell layer is polymerized from a monomer mixture comprising 60-90% by weight of methyl methacrylate as the first monomer, 10-40% by weight of at least one of methacrylic acid and hydroxyethyl methacrylate as the second monomer, the shell layer being contained in an amount of 20-70% by weight based on the core-shell polymer.

**10.** A plastisol which comprises:

(a) a core-shell polymer which comprises a core layer polymerized mainly from an aromatic vinyl monomer, and a shell layer polymerized from a monomer mixture comprising 50-95% by weight of methyl methacrylate as a first monomer, 5-50% by weight of at least one of an α, β-ethylenically unsaturated carboxylic acid and a hydroxyalkyl ester of α, β-ethylenically unsaturated carboxylic acid as a second monomer, and 0-30% by weight of a third monomer copolymerizable with the first and second monomer, the shell layer being contained in an amount of 5-80% by weight based on the core-shell polymer and having a weight average particle size of 0.1-20 microns; and

(b) a plasticizer as an aromatic compound having at least two independent aromatic rings in the molecule in which the core-shell polymer is dispersed.

**11.** The plastisol as claimed in claim 10 wherein not less than 50% by weight of the monomer used for the preparation of the core layer is an aromatic vinyl monomer.

**12.** The plastisol as claimed in claim 10 wherein not less than 80% by weight of the monomer used for the preparation of the core layer is an aromatic vinyl monomer.

**13.** The plastisol as claimed in claim 10 wherein the aromatic vinyl monomer is styrene.

**14.** The plastisol as claimed in claim 10 wherein the core layer is composed of a glassy polymer having a glass transition temperature of not less than 30 °C.

**15.** The plastisol as claimed in claim 10 wherein the monomer mixture for the preparation of the shell layer comprises 60-90% by weight of methyl methacrylate as the first monomer, 10-40% by weight of at least one of an $\alpha$, $\beta$-ethylenically unsaturated carboxylic acid and a hydroxyalkyl ester of $\alpha$, $\beta$-ethylenically unsaturated carboxylic acid as the second monomer, and 0-30% by weight of the third monomer copolymerizable with the first and second monomer.

**16.** The plastisol as claimed in claim 10 wherein the second monomer is at least one of methacrylic acid and hydroxyethyl methacrylate.

**17.** The plastisol as claimed in claim 10 wherein the shell layer is composed of a polymer having a glass transition temperature of not less than 40 °C.

**18.** The plastisol as claimed in claim 10 wherein the core layer is polymerized from styrene, and the shell layer is polymerized from a monomer mixture comprising 60-90% by weight of methyl methacrylate as the first monomer, 10-40% by weight of at least one of methacrylic acid and hydroxyethyl methacrylate as the second monomer, the shell layer being contained in an amount of 20-70% by weight based on the core-shell polymer.

**19.** The plastisol as claimed in claim 10 wherein the plasticizer is represented by the formula

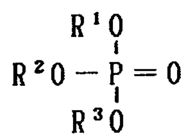

wherein $R^1$ and $R^2$ independently represent an aryl or an arylalkyl each of which may carry inactive substituents thereon, and $R^3$ is an aryl or an arylalkyl each of which may carry inactive substituents thereon, or an alkyl.

**20.** The plastisol as claimed in claim 10 wherein the plasticizer is tricresyl phosphate.

**21.** The plastisol as claimed in claim 10 wherein the plasticizer is tris(isopropylphenyl) phosphate.

**22.** The plastisol as claimed in claim 10 wherein the plasticizer is cresyldiphenyl phosphate.

**23.** The plastisol as claimed in claim 10 wherein the plasticizer is butylbenzyl phthalate.

**24.** A plastigel which comprises:

(a) a core-shell polymer which comprises a core layer polymerized mainly from an aromatic vinyl monomer, and a shell layer polymerized from a monomer mixture comprising 50-95% by weight of methyl methacrylate as a first monomer, 5-50% by weight of at least one of an $\alpha$, $\beta$-ethylenically unsaturated carboxylic acid and a hydroxyalkyl ester of $\alpha$, $\beta$-ethylenically unsaturated carboxylic acid as a second monomer, and 0-30% by weight of a third monomer copolymerizable with the first and second monomer, the shell layer being contained in an amount of 5-80% by weight based on the core-shell polymer and having a weight average particle size of 0.1-20 microns; and

(b) a plasticizer as an aromatic compound having at least two independent aromatic rings in the molecule.

European Patent Office

# EUROPEAN SEARCH REPORT

Application Number

EP 93 10 2806

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 282 668 (DOW)<br>* claim 1 * | 1 | C08F257/02<br>C08K5/00 |
| A | FR-A-2 391 245 (RÖHM G.M.B.H.)<br>* claim 1 * | 10 | |

| TECHNICAL FIELDS SEARCHED (Int. Cl.5 ) |
|---|
| C08F<br>C08K |

The present search report has been drawn up for all claims

| Place of search | Date of completion of the search | Examiner |
|---|---|---|
| THE HAGUE | 02 JUNE 1993 | MEULEMANS R.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)